# EUROPÄISCHE PATENTSCHRIFT

(11) **EP 1 205 677 B1**
(45) Veröffentlichungstag und Bekanntmachung des Hinweises auf die Patenterteilung: **25.05.2005**
(21) Anmeldenummer: 01121839.3
(22) Anmeldetag: 11.09.2001
(51) Int. Cl.: F16C 13/00, D21G 1/02

(54) **Durchbiegungseinstellwalze**
Controlled deflection roll
Rouleau à réglage de la flexion

(30) Priorität: 12.10.2000 DE 10050596
(43) Veröffentlichungstag der Anmeldung: 15.05.2002
(73) Patentinhaber: Voith Paper Patent GmbH, 89522 Heidenheim (DE)
(72) Erfinder: van Haag, Rolf, Dr., 47647 Kerken (DE)
(74) Vertreter: Manitz, Finsterwald & Partner GbR

(56) Entgegenhaltungen:
- EP-B- 0 332 594
- DE-A- 3 734 832

## Beschreibung

Die Erfindung betrifft eine Durchbiegungseinstellwalze mit einem drehbaren Walzenmantel, einem innerhalb des Walzenmantels angeordneten drehfesten Träger, einer hydraulischen Stützelementanordnung zwischen Träger und Walzenmantel, einem in einem jeweiligen Endbereich des Walzenmantels vorgesehenen, in einer Pressenebene relativ zum Träger bewegbaren geschlossenen Lagerring und einer Lageranordnung zwischen Lagerring und Walzenmantel.

Eine derartige Durchbiegungseinstellwalze ist beispielsweise aus der EP 0 332 594 B 1 bekannt. Im Betrieb rotiert der Walzenmantel um den drehfest gelagerten Träger. Sich bei einer entsprechenden Belastung des Walzenmantels ergebende Durchbiegungen werden durch die hydraulische Stützelementanordnung aufgenommen. Diese stützt den Walzenmantel von innen gegenüber dem Träger ab. Hierbei kann es zwar auch zu einer Durchbiegung des Trägers kommen. Die Biegelinie des Walzenmantels ist jedoch entsprechend besser beeinflußbar.

Die Stützelementanordnung kann allerdings nur Kräfte aufnehmen, die in einer durch den mit einer Gegenfläche gebildeten Preßspalt oder -nip verlaufenden Pressenebene wirken. Die betreffenden Kräfte können also beispielsweise von einer Gegenwalze oder einem sich daran anschließenden Walzenstapel erzeugt werden. Zusätzlich muß der Walzenmantel mit einem Lager auf dem Träger gehalten werden, das eine Rotation des Walzenmantels gegenüber dem Träger zuläßt und gleichzeitig eine gewisse Mantelpositionierung erlaubt.

Die betreffende Lageranordnung wird nun in verschiedenen Situationen unterschiedlich belastet. Im Betrieb wird der Walzenmantel von den hydrostatischen Stützelementen gegenüber dem Träger abgestützt. Damit kann die Lageranordnung zumindest bei einem vertikal ausgerichteten Walzenstapel, bei dem auch die Stützelemente zwischen Träger und Walzenmantel eine vertikal ausgerichtete Kraftkomponente erzeugen, praktisch frei von Stützkräften gehalten werden. Das Eigengewicht des Walzenmantels und die von anderen Walzen aufgebrachten in Pressenrichtung wirkenden Kräfte werden von den Stützelementen zwischen Walzenmantel und Träger aufgenommen. Die Lageranordnung dient in diesem Fall praktisch ausschließlich der Positionierung des Walzenmantels gegenüber dem Träger. Wird dagegen der Preßnip des Walzenstapels geöffnet, so ruht das Gewicht des Walzenmantels auf der Lageranordnung. In diesem Fall muß die Lageranordnung in der Lage sein, das Mantelgewicht aufzunehmen, und zwar auch bei sich drehendem Walzenmantel. In allen Fällen muß sichergestellt sein, daß die Lageranordnung mit möglichst kleinem Spiel läuft, das ein vorbestimmtes Maß nicht überschreiten darf.

Bei den bisher bekannten Durchbiegungseinstellwalzen der eingangs genannten Art wird das Lager durch Wälzkörper gebildet. Derartige Wälzlager besitzen nun aber den Nachteil, daß sie bei den zunehmend schneller laufenden Walzen nicht mehr mit der erforderlichen Zuverlässigkeit arbeiten.

Der Erfindung liegt die Aufgabe zugrunde, eine verbesserte Durchbiegungseinstellwalze der eingangs genannten Art zu schaffen, die insbesondere auch bei höheren Betriebsgeschwindigkeiten sicher und zuverlässig arbeitet ist.

Diese Aufgabe wird erfindungsgemäß durch die merkmale des Anspruchs 1 gelöst.

Aufgrund dieser Ausbildung ist es möglich, eine jeweilige Durchbiegungseinstellwalze mit Mantelhub auch bei höheren Geschwindigkeiten zu betreiben, d.h. bei Umfangsgeschwindigkeiten in der Größenordnung von z.B. etwa 2000 m/min. Durch eine entsprechende Verteilung der der Lageranordnung zugeordneten Stützelemente ist eine definierte Abstützung in unterschiedlichen radialen Richtungen möglich, wobei über den den Lagerring durchsetzenden Kraftgeber im Lagerbereich zusätzliche Kräfte auf den Walzenmantel aufgebracht werden können. Da wenigstens ein, vorzugsweise mehrere hydrostatische Stützelemente unabhängig vom Lagerring beweglich sind, sind sie in der Lage, sich auch bei Durchmesserveränderungen des Walzenmantels und/oder des Lagerringes bzw. des Trägers, die durchaus nicht immer gleichartig verlaufen müssen, selbst nachzustellen und somit zu gewährleisten, daß der Walzenmantel stets im gewünschten Maß unterstützt wird. Spiele, wie sie von Wälzlagern her bekannt sind und die unter Umständen zu einem ungünstigen Schwingungsverhalten im Betrieb führen können, werden mit dieser Art der Lagerung äußerst klein gehalten. Die hydrostatische Abstützung des Walzenmantels im Bereich der Rotationslager ermöglicht zudem einen relativ verschleißarmen Betrieb, und zwar auch bei höheren Geschwindigkeiten.

Bei einer aus der DE 29 42 002 C2 bekannten Preßwalze ist zwar bereits ein Stützring mit an dessen Umfang angeordneten hydrostatischen Stützelementen vorgesehen. Dieser Stützring ist jedoch in einem mittleren Walzenbereich angeordnet. Überdies wird dieser Stützring von zwischen ihm und dem Träger angeordneten Kraftgebern beaufschlagt.

Bei einer bevorzugten praktischen Ausführungsform der erfindungsgemäßen Durchbiegungseinstellwalze ist beiderseits der Pressenebene jeweils wenigstens ein hydrostatisches Stützelement vorgesehen. Dabei können auf jeder Seite insbesondere jeweils wenigstens zwei solche Stützelemente vorgesehen sein.

Von Vorteil ist auch, wenn zumindest ein Teil der hydrostatischen Stützelemente paarweise auf einander gegenüberliegenden Lagerringseiten angeordnet sind und die beiden Stützelemente eines jeweiligen Paares einander entgegengesetzte radiale Wirkrichtungen besitzen.

Bei einer weiteren zweckmäßigen Ausführungsform der erfindungsgemäßen Durchbiegungseinstellwalze sind zwei auf einander gegenüberliegenden Trägerseiten angeordnete, in entgegengesetzten Radialrichtungen wirkende Kraftgeber vorgesehen.

Vorzugsweise ist wenigstens ein Kraftgeber durch eine jeweilige hydraulische Zylinder/Kolben-Anordnung gebildet.

Der Lagerring ist zweckmäßigerweise starr ausgeführt. Er ist vorteilhafterweise so dimensioniert, daß bei zueinander koaxialer Anordnung von Träger und Lagerring zwischen diesen ein Ringspalt verbleibt.

Infolge des starren, geschlossenen Lagerringes werden die bei beliebigen Walzendeformationen auftretenden Kräfte über diesen Ring von der einen zur anderen Seite und dort wieder auf den Walzenmantel übertragen, ohne daß es dabei zu einer Abstützung am inneren Träger kommt. Es wird eine Art Spreizring gebildet, durch den der Walzenmäntel gespreizt wird. Eine Abstützung am inneren Träger soll also normalerweise nicht erfolgen. Lediglich bei auftretenden Tangentialkräften und damit einhergehenden Kippbewegungen und bei anderen von außen wirkenden Kräften kann eine Abstützung des Lagerringes am Träger erfolgen. Entsprechende äußere Kräfte können beispielsweise bei einer horizontalen Walzenanordnung mit oben liegenden, das Walzengewicht tragenden Stabilisierungselementen und bei der Verwendung eines äußeren Schabers auftreten, durch den allerdings nur geringfügige Kräfte erzeugt werden.

Bei einer bevorzugten praktischen Ausführungsform der erfindungsgemäßen Durchbiegungseinstellwalze weist das bewegliche Stützelement eine Lagertaschenanordnung auf, deren wirksame Fläche größer ist als eine Fläche des Stützelements, auf die ein Druck zwischen Lagerring und Stützelement wirkt. Dadurch ist sichergestellt, daß das Stützelement zwar mit einer gewissen Kraft in den Lagerring hineingedrückt werden kann, wenn entsprechende Kräfte auf den Walzenmantel wirken. Da sich jedoch oberhalb und unterhalb des Stützelements hydraulische Drücke aufbauen, bleibt die Kraft, mit der das Stützelement am Lagerring anliegt, begrenzt. Deren Größe ist mit der Flächendifferenz beeinflußbar. Damit ergibt sich eine stabile Abstützung auch bei sich ändernden Durchmessern des Walzenmantels. Es ist praktisch sichergestellt, daß der Walzenmantel stets auf einem Flüssigkeitsfilm gleitet.

Vorzugsweise ist das Stützelement unter Last bis zur Hartlage in den Lagerring einfahrbar. Da zwischen der ringseitigen Stirnfläche des Stützelements und dem Lagerring keine zu einer Reibung führende Relativbewegung auftritt, kann ein solches Einfahren des Stützelements "bis zum Anschlag" in Kauf genommen werden. Im Betrieb wird der Walzenmantel beispielsweise von den Stützelementen zwischen Träger und Walzenmantel oder auch von unter dem Walzenmantel angeordneten weiteren Walzen unterstützt, die mit der Durchbiegungseinstellwalze einen Nip bilden. In diesem Fall ist die Lageranordnung praktisch frei von äußeren Stützkräften. Sie dient hauptsächlich dazu, den Walzenmantel gegenüber dem Träger zu positionieren. Aufgrund des wenigstens einen beweglichen Stützelements zwischen Lagerring und Walzenmantel ist es möglich, die Lageranordnung mit einem sehr geringen Spiel auszubilden. Die Stützelemente können unter Ausbildung eines Flüssigkeitsfilms der Hydraulikflüssigkeit stets in unmittelbarer Nähe zur Innenseite des Walzenmantels gehalten werden.

Bei einer bevorzugten praktischen Ausführungsform der erfindungsgemäßen Durchbiegungseinstellwalze ist die Lagertaschenanordnung mit einer Versorgungseinrichtung verbunden, die einen konstanten Volumenstrom von hydraulischer Flüssigkeit liefert. Dabei ist die Lagertaschenanordnung zweckmäßigerweise über eine das Stützelement durchsetzende Kapillarenanordnung mit einem zwischen Stützelement und Lagerring vorgesehenen Druckraum verbunden.

Infolge der Versorgung der Lagertaschenanordnung mit einem konstanten Volumenstrom steigt der Druck über dem betreffenden Stützelement bei zunehmender Belastung an, so daß es wieder zu einem Kräftegleichgewicht kommt. Dabei ergibt sich zwischen dem Druckraum unter dem Stützelement und der Taschenanordnung auf dessen Oberfläche durch die das Stützelement durchsetzende Kapillarenanordnung ein konstanter Druckverlust. Deshalb steigt auch der Druck im Druckraum unter dem Stützelement bei zunehmendem Taschendruck an. Dies bedeutet für den Fall eines unter Last bis zur Hartlage in den Lagerring eingefahrenen Stützelements wiederum, daß die Kraft, die durch die Anlage des Stützelements am Boden des Druckraums aufgebracht wird, in jedem Fall sehr klein ist. Sie hängt vom Verhältnis der wirksamen Fläche der Lagertaschenanordnung zur druckbelasteten Fläche des Stützelements auf der Seite des Lagerrings ab. Bei einem üblichen Flächenverhältnis von beispielsweise 1,1 beträgt die Anlagekraft nur 1/10 der Stützquellen- oder Stützelementkraft. Durch den konstanten Volumenstrom kann somit unabhängig von der jeweiligen Belastung sichergestellt werden, daß die Stützfunktion für jedes Stützelement erhalten bleibt, und zwar auch dann, wenn das Stützelement bis zur Hartlage in den Lagerring eingefahren ist. Entsprechend ist stets dafür gesorgt, daß zwischen dem Stützelement und dem Walzenmantel ein Flüssigkeitsfilm aufrechterhalten wird.

Die Kapillarenanordnung ist vorzugsweise so dimensioniert, daß im unbelasteten Zustand eine vorbestimmte Vorspannkraft nicht überschritten wird, bei einer vorbestimmten Belastung aber eine vorbestimmte minimale Spalthöhe gewährleistet ist. Der unbelastete Zustand ist leicht ermittelbar. Man dimensioniert die Kapillarenanordnung so, daß im unbelasteten Zustand eine ausreichende Menge von Hydraulikflüssigkeit zur Lagertaschenanordnung fließen kann, so daß der Druck im Druckraum einen vorbestimmten Wert nicht überschreitet. Damit wird im unbelasteten Zustand eine zu starke Belastung des Walzenmantels verhindert. Umgekehrt darf der Drosselwiderstand der Kapillarenanordnung nicht zu klein sein, so daß bei jeder Belastung gewährleistet ist, daß zwischen Stützelement und Walzenmantel ein Spalt mit einer vorbestimmten Größenordnung erhalten bleibt.

Dabei kann die Versorgungseinrichtung beispielsweise so an die Kapillarenanordnung angepaßt sein, daß sich bei maximaler Last ein minimaler Spalt zwischen Stützelement und Walzenmantel im Bereich von beispielsweise etwa 20 bis etwa 30 µm ergibt. Ein solcher Spalt ist ausreichend, um eine Beschädigung des Walzenmantels durch Aufsetzen auf dem Stützelement zu verhindern. Andererseits ist er eng genug, um den Ölstrom durch das Stützelement ausreichend zu drosseln, so daß der Flüssigkeitsverbrauch in einem vertretbaren Bereich gehalten wird.

Von Vorteil ist auch, wenn das bzw. die beweglichen Stützelemente ein Hubhöhe gegenüber dem Lagerring in radialer Richtung aufweisen, die zumindest im wesentlichen einer maximalen Veränderung entspricht, die sich aus thermischen Durchmesser unterschieden und/oder Walzenmantel- bzw. Trägerverformungen durch Niplasten ergibt. Man kann die Hubhöhe also auf sehr kleine Werte beschränken.

Der Hub muß nur so groß sein, daß er die genannten Veränderungen, die sich aus thermischen Durchmesserunterschieden und Verformungen des Walzenmantels bzw. der Achsen durch Niplasten ergeben, ausgleichen kann. Der Hub eines jeweiligen Stützelements kann insbesondere etwa dem Lagerspiel eines herkömmlichen Wälzlagers entsprechen. So kann diese Hubhöhe beispielsweise in einem Bereich von etwa 0,1 bis etwa 0,5 mm liegen, was im wesentlichen dem Spiel eines C3-Pendelrollenlagers entspricht, wobei durch die Hubhöhe gewährleistet wird, daß bei der erfindungsgemäßen Abstützung eben kein Spiel auftritt.

Bei einer zweckmäßigen Ausführung ist die ringseitige Stirnfläche wenigstens eines Stützelements gekrümmt. Eine solche Ausführung ist insbesondere dann zweckmäßig, wenn das betreffende Stützelement bei einer entsprechenden Belastung bis zur Hartlage in den Lagerring eingefahren wird. Mit der gekrümmten Stützfläche wird vermieden, daß das Stützelement mit einer Kante am Boden des Zylinder- oder Druckraums aufsitzt, wenn der Träger durch eine entsprechende Belastung gekrümmt wird. Damit wird der Verschleiß entsprechend verringert. Zudem ergibt sich ein hydrostatisches Lager für eine Walze mit Mantelhub, das den Anforderungen eines sich biegenden Trägers relativ gut gerecht wird. Das in den Lagerring eingefahrene Stützelement kann auf dem Boden des Zylinderraums abrollen oder im Bodenbereich des Zylinderraums trotz der Möglichkeit einer Neigung flächig anliegen. So kann das Stützelement beispielsweise in einem Zylinderraum angeordnet sein, dessen Boden zur Stirnfläche des Zylinderelements komplementär gekrümmt ist. Die komplementär gekrümmte Bodenfläche kann beispielsweise durch einen entsprechenden Einsatz in der betreffenden Zylinderbohrung gebildet sein.

Es ist beispielsweise jedoch auch möglich, das betreffende Stützelement in einem Zylindergehäuse anzuordnen, das einen konkav gewölbten Boden aufweist, der sich auf einer entsprechend konvex gewölbten Fläche auf dem Träger abstützt. Auch in diesem Fall wird ggf. eine vollflächige Abstützung unter Aufrechterhaltung der Möglichkeit einer Neigung erreicht.

Von Vorteil ist auch, wenn ein Lagerring vorzugsweise auf seiner dem betreffenden Walzenende zugewandten Seite über wenigstens ein hydrostatisches Stützelement axial am Walzenmantel abgestützt ist. Alternativ oder zusätzlich kann der Lagerring auch über hydrostatische Gleitflächen axial am Walzenmantel anliegen. Auf diese Weise kann am betreffenden axialen Walzenende ein Festlager realisiert werden. Auf seiner gegenüberliegenden Seite ist der Lagerring zweckmäßigerweise kippbar und/oder radial beweglich am Träger abgestützt.

Vorteilhafterweise ist zwischen wenigstens einem beweglichen Stützelement und dem zugeordneten Lagerring eine Feder angeordnet, bei der es sich insbesondere um eine Tellfeder handeln kann. Wie bereits erwähnt, werden die Stützelemente vorzugsweise mit einem konstanten Volumenstrom beaufschlagt, der auch in die Lagertaschen gelangt. Die Stützelemente haben in dem Lagerring vorzugsweise nur einen geringen Hub, der beispielsweise etwa dem Lagerspiel eines herkömmlichen Wälzlagers entsprechen kann. Im Fall einer hinreichend großen anstehenden Lagerkraft fahren die belasteten Stützelemente in den Lagerring auf Anschlag oder in Hartlage. In diesem Fall steigt der Druck über dem Stützelement an, bis das Kräftegleichgewicht erreicht ist. Da aufgrund des konstanten Volumenstroms auch der Druck unter den Stützelementen ansteigt, ist die Anlagekraft des Stützelements am Lagerring im Verhältnis zur Gesamtkraft, die das Stützelement aufnimmt, sehr klein. Sie hängt, wie bereits erwähnt, vom Verhältnis der wirksamen Fläche der Lagertaschenanordnung und der ringseitigen druckbelasteten Stirnfläche des Stützelements ab. Bei einem üblichen Flächenverhältnis von beispielsweise 1,1 beträgt die Anlagekraft daher nur etwa 10 % der Stützelementkraft. Durch dieses große Übersetzungsverhältnis ist es möglich, die Kraftaufnahme unter dem Stützelement auch durch eine handelsübliche elastische Feder, z.B. eine Tellerfeder, aufzufangen, was, wie sich aus dem folgenden ergibt, eine Reihe weiterer Vorteile mit sich bringt.

Durch eine elastische Bettung der Stützelemente kann die Federkennlinie der Lagerung individuell gestaltet werden. Ein Stützelement, das sich frei bewegen kann, erzeugt bei konstantem Volumenstrom über den Weg eine konstante Stützkraft. Fährt das Stützelement gegen einen starren Anschlag, so können die Kräfte ohne praktische Wegänderung steigen. Bei der Bettung des Stützelements auf einer Feder erhält man eine lineare Kraft-Weg-Charakteristik. Wird die Feder schon während der Montage der Lagereinzelteile vorgespannt, so erhält man eine spielfreie Lagerung.

Dabei kann das jeweilige Stützelement beispielsweise einen parallel zur Feder bewegbaren Anschlag aufweisen, der nach einem vorbestimmten Federweg am Lagerring zur Anlage kommt. Mit dieser Ausgestaltung kann die Kraft-Weg-Kennlinie des Stützelements individuell gestaltet werden. Bei einer Bettung des Stützelements auf einer Feder erhält man die bereits erwähnte lineare Kraft-Weg-Charakteristik. Fährt das Stützelement hingegen in Hartlage, in der der Anschlag am Lagerring zur Anlage kommt, so können die Kräfte ohne praktische Wegänderung steigen. Durch eine Kombination dieser beiden Fälle läßt sich also in weiten Grenzen eine Federcharakteristik einstellen.

Ist der maximale Federweg beispielsweise kürzer als der maximale Hub des Stützelements, so läßt sich eine weitere Eigenschaft in den Kraft-Weg-Verlauf einbauen. Ein Stützelement, das sich frei bewegen kann, erzeugt über den Weg nämlich eine konstante Anstellkraft. Kombiniert man also die oben genannte Kraft-Weg-Verhältnisse mit dem konstanten Kraft-Weg-Verlauf, so lassen sich bereits drei unterschiedliche Abschnitte im Kraft-Weg-Verhältnis verwirklichen.

Die Erfindung wird im folgenden anhand eines Ausführungsbeispiels unter Bezugnahme auf die Zeichnung näher erläutert; in dieser zeigen:
- Figur 1: eine schematische Querschnittsdarstellung einer beispielhaften Ausführungsform einer Durchbiegungseinstellwalze, geschnitten entlang der Linie I-I in Figur 2,
- Figur 2: eine schematische Längsschnittteildarstellung der Walze, geschnitten entlang der Linie II-II der Figur 1, und
- Figur 3: eine perspektivische Darstellung des einen, in den Figuren 1 und 3 erkennbaren Lagers der Walze.

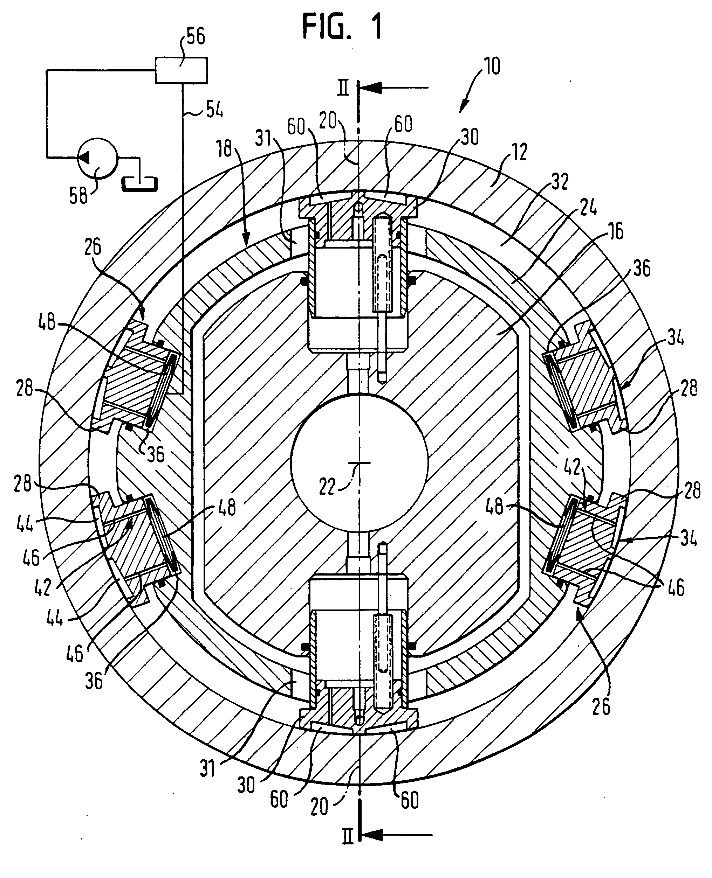

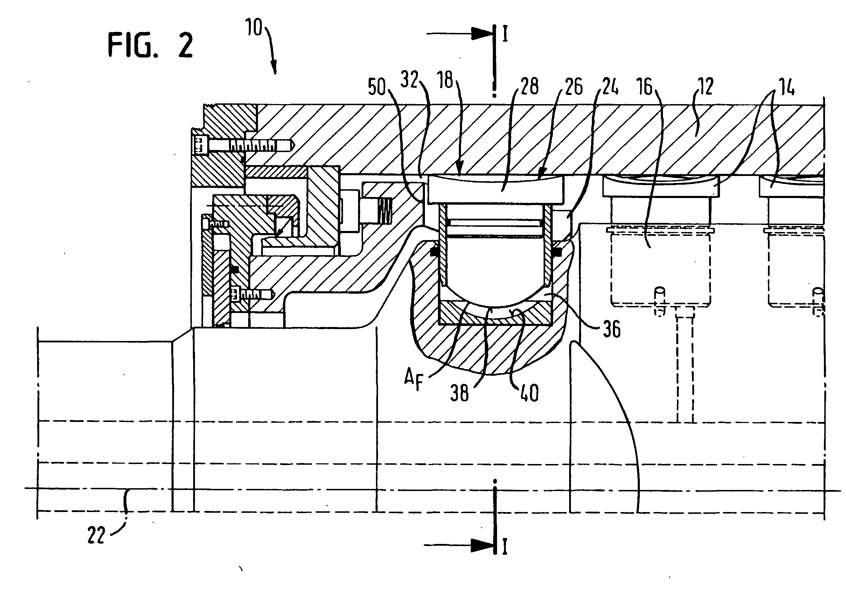

Die Figuren 1 bis 3 zeigen eine Durchbiegungseinstellwalze 10 mit einem drehbaren Walzenmantel 12, der über eine hydraulische Stützelementanordnung 14 (vgl. Figur 2) auf einem drehfesten Träger 16 abgestützt ist. Der Walzenmantel 12 ist durch ein Walzenrohr gebildet, in dessen Hohlraum der Träger 16 angeordnet ist. Der Walzenmantel 12 kann um den drehfesten Träger 16 rotieren.

Im Bereich seiner beiden axialen Enden ist der Walzenmantel 12 jeweils durch ein Lager drehbar auf dem Träger 16 gelagert. Von diesen beiden Lagern ist in den Figuren 1 bis 3 jeweils nur das ausgehend von der Darstellung in Figur 2 linke Lager 18 zu erkennen. Hierbei ist dieses linke Lager 18 als Festlager und das andere, nicht dargestellte Lager als Loslager ausgebildet.

Abgesehen davon, daß das eine Lager 18 im vorliegenden Fall als Festlager und das andere, hier nicht dargestellte Lager als Loslager ausgebildet ist, können die beiden Lager zumindest im wesentlichen den gleichen Aufbau besitzen. Im folgenden wird daher nur das in den Figuren 1 bis 3 erkennbare linke Lager 18 näher beschrieben.

Die Walze 10 kann mit einer Gegenfläche, beispielsweise gebildet durch eine Gegenwalze, einen Preßspalt oder -nip bilden, wodurch eine Pressenebene 20 definiert wird, die durch diesen Preßspalt und die Walzenachse 22 hindurchgeht. In dieser Pressenebene 20 wirkt insbesondere auch die in der Figur 2 angedeutete hydraulische Stützelementanordnung 14.

Gemäß den Figuren 1 bis 3 umfaßt das Lager 18 einen in der Pressenebene 20 relativ zum Träger 16 bewegbaren geschlossenen Lagerring 24.

Bezogen auf die Figuren 1 und 2 kann also der Walzenmantel 12 gegenüber dem Träger 16 nach oben und nach unten bewegt werden. Eine derartige Walze 10 wird auch als Walze mit Mantelhub bezeichnet. Die Bewegung wird also dadurch verwirklicht, daß der Lagerring 24 gegenüber dem Träger 16 bewegt wird. Die betreffende Bewegung des Walzenmantels 12 kann über die hydraulische Stützelementanordnung 14 gesteuert werden.

Zwischen dem Lagerring 24 und dem Walzenmantel 12 ist eine Lageranordnung 26 vorgesehen, die im vorliegenden Fall beiderseits der Pressenebene 20 jeweils zwei in Umfangsrichtung einen Abstand voneinander aufweisende hydrostatische Stützelemente 28 umfaßt. Im vorliegenden Fall sind die hydrostatischen Stützelemente 28 paarweise so auf einander gegenüberliegenden Lagerringseiten angeordnet, daß die beiden Stützelemente 28 eines jeweiligen Paares in einander entgegengesetzten Radialrichtungen wirken. Dabei sind die Stützelemente 28 jeweils relativ zum Träger 16 radial beweglich.

Wie insbesondere anhand der Figuren 1 und 2 zu erkennen ist, ist zwischen dem Träger 16 und dem Walzenmantel 12 wenigstens ein allgemein radial in der Pressenebene 20 wirkender, den Lagerring 24 radial durchsetzender Kraftgeber 30 angeordnet. Beim vorliegenden Ausführungsbeispiel sind im Bereich des Lagerringes 18 zwei solche Kraftgeber 30 vorgesehen. Wie anhand der Figur 1 zu erkennen ist, sind diese auf einander gegenüberliegenden Trägerseiten angeordnet, wobei sie in der Pressenebene 20 in entgegengesetzten Radialrichtung wirken. Die beiden Kraftgeber 30 sind jeweils durch eine hydraulische Zylinder/Kolben-Anordnung gebildet. Wie anhand der Figur 1 zu erkennen ist, ist zwischen dem Innenumfang der betreffenden Ringausnehmungen 31 und den Kolben der Kraftgeber 30 relativ viel Spiel.

Der Lagerring 24 ist starr ausgeführt und so dimensioniert, daß bei zueinander koaxialer Anordnung von Träger 16 und Lagerring 24 zwischen diesen ein Ringspalt 32 gebildet wird (vgl. insbesondere Figur 1).

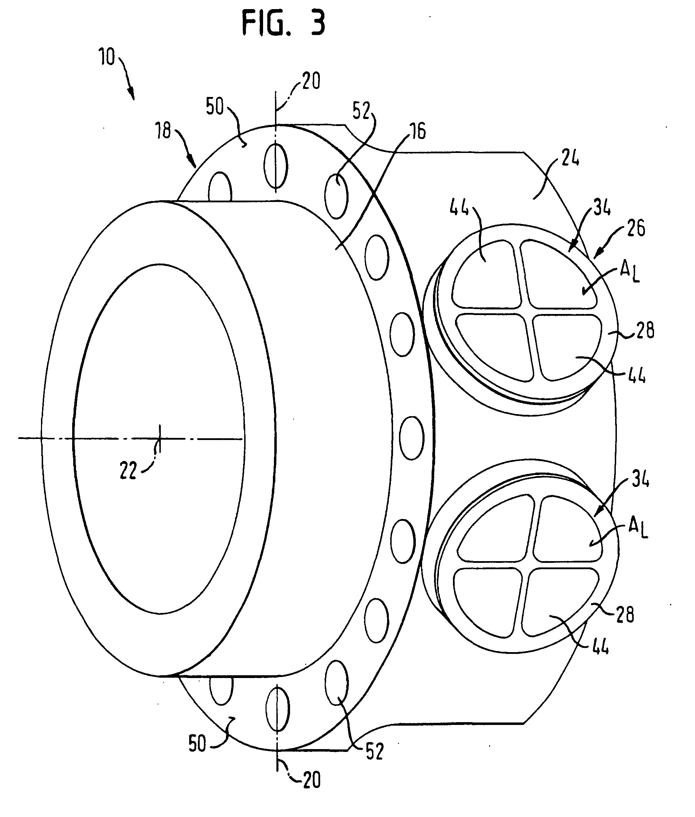

Die beweglichen Stützelemente 28 können jeweils eine Lagertaschenanordnung 34 aufweisen, deren wirksame Fläche A_{L} größer ist als eine Fläche A_{F} des jeweiligen Stützelements 28, auf die ein Druck zwischen Lagerring 24 und Stützelement 28 wirkt (vgl. insbesondere die Figuren 2 und 3).

Wie insbesondere anhand der Figuren 1 und 2 zu erkennen ist, weist der Lagerring 24 vier Zylinderräume oder -bohrungen 36 auf, in denen jeweils ein Stützelement 28 angeordnet ist. Der mögliche Hub der Stützelemente 28 kann sich auf sehr kleine Bereiche begrenzen. Er muß lediglich einem Spiel eines herkömmlichen Wälzlagers, z.B. eines C3-Pendelrollenlagers, entsprechen. Er kann also in der Größenordnung von beispielsweise etwa 0,1 bis etwa 0,5 mm, vorzugsweise sogar nur im Bereich von etwa 0,1 bis etwa 0,3 mm liegen. Eine solche Hubbewegung reicht aus, um Verformungen aufzunehmen, die sich aus thermischen Durchmesserunterschieden oder aus Walzenmantel- bzw. Trägerverformungen ergeben, die durch Niplasten entstehen können.

Wie sich insbesondere aus der Figur 2 ergibt, kann die druckbeaufschlagte trägerseitige Stirnfläche 38 der Stützelemente 28 gekrümmt sein. Dabei können die Stützelemente 28 jeweils beispielsweise in einem Zylinderraum 36 angeordnet sein, dessen Boden 40 zur gleichzeitig die Fläche A_{F} bildenden Stirnfläche 36 des Stützelements 28 komplementär gekrümmt ist. Wenn nun das Stützelement 28 aufgrund einer entsprechenden Belastung des Walzenmantels 12 bis zum Anschlag in den Lagerring 24 eingedrückt wird, so ist auch bei einer Durchbiegung des Trägers 16 ausgeschlossen, daß das Stützelement 28 mit einer Kante auf dem Boden des Zylinderraums 36 aufsitzt. Es ist vielmehr auch in diesem Fall eine flächige Berührung sichergestellt.

Die Lagertaschenanordnung 34 eines jeweiligen Stützelements 28 kann mit einer jeweiligen Versorgungseinrichtung 54 - 58 verbunden sein, die einen konstanten Volumenstrom von hydraulischer Flüssigkeit liefert. Dabei ist die Lagertaschenanordnung 34 über eine das Stützelement 28 durchsetzende, für jede Lagertasche 44 jeweils wenigstens eine Kapillare 46 umfassende Kapillarenanordnung 42 mit einem Zwischenstützelement 28 und Lagerring 24 vorgesehenen Druckraum 48 verbunden. Die Kapillarenanordnung 42 kann insbesondere so dimensioniert sein, daß im unbelasteten Zustand eine vorbestimmte Vorspannkraft nicht überschritten wird, bei einer vorbestimmten Belastung aber eine vorbestimmte minimale Spalthöhe gewährleistet ist.

Wie insbesondere anhand der Figur 1 zu erkennen ist, kann zwischen einem jeweiligen beweglichen Stützelement 28 und dem Lagerring 24 jeweils eine Feder 48, z.B. eine Tellerfeder, angeordnet sein.

Wie insbesondere anhand der Figuren 2 und 3 zu erkennen ist, kann der Lagerring 24 auf seiner dem betreffenden Walzenende zugewandten Seite z.B. über mehrere über den Umfang verteilte, an einer Stirnfläche 50 vorgesehene hydrostatische Stützelemente 52 oder wenigstens eine hydrostatische Lagerfläche axial am Walzenmantel 12 abgestützt sein. Auf seiner gegenüberliegenden Seite ist der Lagerring 24 kippbar und/oder radial beweglich am Träger 16 abgestützt. Dabei kann er beispielsweise gleitend an einem bezüglich des Trägers 16 schwenkbaren Teil anliegen.

Wie anhand der Figur 1 zu erkennen ist, kann jeder Zylinderraum 36 bzw. in diesem gebildete Druckraum mit einer Versorgungsleitung 54 verbunden sein, durch die eine Hydraulikflüssigkeit unter Druck zugeführt wird. Jede Vorsorgungsleitung 54 kann z.B. über einen Regler 56 mit einer gemeinsamen Pumpe 58 verbunden sein. Die Regler 56 sorgen dafür, daß stets ein konstanter Volumenstrom durch die Leitungen 54 (in Figur 1 nur eine dargestellt) in die Zylinder- bzw. Druckräume 36 gelangt.

Im vorliegenden Fall weist jedes Stützelement 28 vier Lagertaschen 44 auf. Die Kapillaren 42 bilden jeweils eine Drosselleitung. Aufgrund des konstanten Volumenstroms in jeden Zylinderraum 36 wird auch ein konstanter Volumenstrom zumindest in der Summe der Kapillaren 42 eines jeweiligen Stützelements 28 erzeugt. Dementsprechend ist der Druckabfall über dem Stützelement 28 in jedem Fall gleich. Man kann nun den Druckabfall in der jeweiligen Kapillare 42 so wählen, daß auch bei der stärksten Belastung des Walzenmantels 12 stets ein Mindestspalt zwischen der radial äußeren Stützfläche des Stützelements 28 und der Innenseite des Walzenmantels 12 verbleibt, der beispielsweise in einem Bereich von etwa 20 bis etwa 30 µm liegen kann.

Im vorliegenden Fall sind den Stützelementen 28 getrennte Regler 56 und eine gemeinsame Pumpe 58 zugeordnet. Es ist beispielsweise auch möglich, für jedes Stützelement 28 eine eigene geregelte Pumpe 58 zu verwenden.

Der in einem Endbereich des Walzenmantels 12 vorgesehene Lagerring 24 kann in einem Bereich angeordnet sein, in dem der Träger einen im Vergleich zum mittleren Bereich geringeren maximalen Außendurchmesser besitzt.

Die seitlichen, der Stabilisierung dienenden Stützelemente 28 haben in dem Lagerring 24 also vorzugsweise nur einen geringen Hub, der z.B. in etwa dem Lagerspiel eines herkömmlichen Wälzlagers entspricht. Im Fall einer anstehenden Kraft von außen kommen die Stützelemente 28 in Anlage am Boden des jeweiligen Zylinderraums 36 bzw. in Anlage an die jeweilige zusammengepreßte Feder 48. Da die Stützelemente 28 nun aber mit einem konstanten Volumenstrom versorgt werden, steigt der Druck über dem jeweiligen Stützelement 28 an, so daß es wieder zu einem Kräftegleichgewicht kommt.

Der Druckverlust zwischen Druckraum 36 unter dem jeweiligen Stützelement 28 und der Lagertaschenanordnung 34 auf der Oberfläche des Stützelements 28 ist durch die das Stützelement 28 durchsetzende Kapillarenanordnung 42 konstant. Deshalb steigt auch der Druck im Druckraum unter dem Stützelement 28 mit zunehmendem Taschendruck an. Das bedeutet wiederum, daß die Kraft, die durch die Anlage des Stützelements am Boden des Zylinderraums 36 aufgebracht wird, in jedem Fall sehr klein ist. Sie hängt vom Verhältnis der wirksamen Fläche A_{L} der Lagertaschenanordnung 34 und der druckbeaufschlagten unteren Fläche A_{K}, d.h. der Kolbenfläche des Stützelements ab. Bei einem üblichen Flächenverhältnis von A_{L}/A_{K} = 1,1 beträgt die Anlagekraft nur 1/10 der Stützelement- oder Stützquellenkraft. Deshalb ist es möglich, die Kraftaufnahme unter einem jeweiligen Stützelement auch durch eine handelsübliche Feder wie insbesondere eine übliche Tellerfeder aufzufangen. Daraus ergeben sich die folgenden Vorteile:

Durch eine elastische Einbettung der Stützelemente 28 kann die Federkennlinie der Lagerung individuell gestaltet werden. Ein Stützelement 28, das sich frei bewegen kann, erzeugt bei konstantem Volumenstrom eine über den Weg konstante Stützkraft. Fährt das jeweilige Stützelement 28 gegen einen starren Anschlag, so können die Kräfte praktisch ohne Wegänderung steigen. Bei der Bettung eines jeweiligen Stützelements 28 auf einer Feder 48 erhält man eine lineare Kraft-Weg-Charakteristik. Wird die Feder 48 schon während der Montage der Lagereinzelteile vorgespannt, so erhält man eine spielfreie Lagerung.

Wie anhand der Figur 1 zu erkennen ist, können auch die Kraftgeber 30 jeweils wieder mit hydrostatischen Lagertaschen 60 versehen sein.

Infolge des vorzugsweise starren, geschlossenen Lagerringes werden die bei beliebigen Walzendeformationen auftretenden Kräfte über diesen Ring von der einen zur anderen Seite und dort wieder auf den Walzenmantel übertragen, ohne daß es dabei zu einer Abstützung am inneren Träger kommt. Es wird eine Art Spreizring gebildet, durch den der Walzenmantel gespreizt wird. Eine Abstützung am inneren Träger soll also normalerweise nicht erfolgen. Lediglich bei auftretenden Tangentialkräften und damit einhergehenden Kippbewegungen und bei anderen von außen wirkenden Kräften kann eine Abstützung des Lagerringes am Träger erfolgen. Entsprechende äußere Kräfte können beispielsweise bei einer horizontalen Walzenanordnung mit oben liegenden, das Walzengewicht tragenden Stabilisierungselementen und bei der Verwendung eines äußeren Schabers auftreten, durch den allerdings nur geringfügige Kräfte erzeugt werden.

### Bezugszeichenliste

- 10: Durchbiegungseinstellwalze
- 12: Walzenmantel
- 14: hydrostatische Stützelementanordnung
- 16: Träger
- 18: Lager
- 20: Pressenebene
- 22: Walzenachse
- 24: Lagerring
- 26: Lageranordnung
- 28: hydrostatisches Stützelement
- 30: Kraftgeber
- 31: Ringausnehmungen
- 32: Ringspalt
- 34: Lagertaschenanordnung
- 36: Zylinderraum
- 38: Stirnfläche
- 40: Boden
- 42: Kapillarenanordnung
- 44: Lagertasche
- 46: Kapillare
- 48: Feder
- 50: Stirnfläche
- 52: hydrostatisches Stützelement
- 54: Versorgungsleitung
- 56: Regler
- 58: Pumpe
- 60: hydrostatische Lagertasche

- A_{L}: wirksame Fläche der Lagertaschenanordnung
- A_{K}: wirksame Stirnfläche, Kolbenfläche

## Patentansprüche

1. Durchbiegungseinstellwalze (10) mit einem drehbaren Walzenmantel (12), einem innerhalb des Walzenmantels (12) angeordneten drehfesten Träger (16) , einer hydraulischen Stützelementanordnung (14) zwischen Träger (16) und Walzenmantel (12), einem in einem jeweiligen Endbereich des Walzenmantels (12) vorgesehenen, in einer Pressenebene (20) relativ zum Träger (16) bewegbaren geschlossenen Lagerring (24) und einer Lageranordnung (26) zwischen Lagerring (24) und Walzenmantel (12),
**dadurch gekennzeichnet,**
**daß** die Lageranordnung (26) wenigstens zwei in Umfangsrichtung einen Abstand voneinander aufweisende hydrostatische Stützelemente (28) umfaßt, von denen wenigstens eines relativ zum Träger (16) beweglich ist, und daß zwischen dem Träger (16) und dem Walzenmantel (12) wenigstens ein allgemein radial in der Pressenebene (20) wirkender, den Lagerring (24) radial durchsetzender Kraftgeber (30) angeordnet ist.

2. Durchbiegungseinstellwalze nach Anspruch 1,
**dadurch gekennzeichnet,**
**daß** beiderseits der Pressenebene (20) jeweils wenigstens ein hydrostatisches Stützelement (28) vorgesehen ist.

3. Durchbiegungseinstellwalze nach Anspruch 2,
**dadurch gekennzeichnet,**
**daß** beiderseits der Pressenebene (20) jeweils wenigstens zwei hydrostatische Stützelemente (28) vorgesehen sind.

4. Durchbiegungseinstellwalze nach einem der vorhergehenden Ansprüche,
**dadurch gekennzeichnet,**
**daß** zumindest ein Teil der hydrostatischen Stützelemente (28) paarweise auf einander gegenüberliegenden Lagerringsseiten angeordnet sind und die beiden Stützelemente (28) eines jeweiligen Paares einander entgegengesetzte radiale Wirkrichtungen besitzen.

5. Durchbiegungseinstellwalze nach einem der vorhergehenden Ansprüche,
**dadurch gekennzeichnet,**
**daß** zwei auf einander gegenüberliegenden Trägerseiten angeordnete, in entgegengesetzten Radialrichtungen wirkende Kraftgeber (30) vorgesehen sind.

6. Durchbiegungseinstellwalze nach einem der vorhergehenden Ansprüche,
**dadurch gekennzeichnet,**
**daß** wenigstens ein eine hydraulische Zylinder/Kolben-Anordnung umfassender Kraftgeber (30) vorgesehen ist.

7. Durchbiegungseinstellwalze nach einem der vorhergehenden Ansprüche,
**dadurch gekennzeichnet,**
**daß** der Lagerring (24) starr ausgeführt ist.

8. Durchbiegungseinstellwalze nach einem der vorhergehenden Ansprüche,
**dadurch gekennzeichnet,**
**daß** der Lagerring (24) so dimensioniert ist, daß bei zueinander koaxialer Anordnung von Träger (16) und Lagerring (24) zwischen diesen ein Ringspalt (32) gebildet ist.

9. Durchbiegungseinstellwalze nach einem der vorhergehenden Ansprüche,
**dadurch gekennzeichnet,**
**daß** das bewegliche Stützelement (28) eine Lagertaschenanordnung (34) aufweist, deren wirksame Fläche (A_{L}) größer ist als eine Fläche (A_{K}) des Stützelements (28), auf die ein Druck zwischen Lagerring (24) und Stützelement (28) wirkt.

10. Durchbiegungseinstellwalze nach Anspruch 9,
**dadurch gekennzeichnet,**
**daß** das Stützelement (28) unter Last bis zur Hartlage in den Lagerring (24) einfahrbar ist.

11. Durchbiegungseinstellwalze nach einem der vorhergehenden Ansprüche,
**dadurch gekennzeichnet,**
**daß** die Lagertaschenanordnung (34) mit einer Versorgungseinrichtung verbunden ist, die einen konstanten Volumenstrom von hydraulischer Flüssigkeit liefert.

12. Durchbiegungseinstellwalze nach Anspruch 11,
**dadurch gekennzeichnet,**
**daß** die Lagertaschenanordnung (34) über eine das Stützelement (28) durchsetzende Kapillarenanordnung (42) mit einem zwischen Stützelement (28) und Lagerring (24) vorgesehenen Druckraum (48) verbunden ist.

13. Durchbiegungseinstellwalze nach Anspruch 12,
**dadurch gekennzeichnet,**
**daß** die Kapillarenanordnung (42) so dimensioniert ist, daß im unbelasteten Zustand eine vorbestimmte Vorspannkraft nicht überschritten wird, bei einer vorbestimmten Belastung aber eine vorbestimmte minimale Spalthöhe gewährleistet ist.

14. Durchbiegungseinstellwalze nach einem der vorhergehenden Ansprüche,
**dadurch gekennzeichnet,**
**daß** das bzw. die beweglichen Stützelemente (28) eine Hubhöhe gegenüber dem Lagerring (24) in radialer Richtung aufweisen, die zumindest im wesentlichen einer maximalen Veränderung entspricht, die sich aus thermischen Durchmesserunterschieden und/oder Walzenmantel- bzw. Trägerverformungen durch Niplasten ergibt.

15. Durchbiegungseinstellwalze nach einem der vorhergehenden Ansprüche,
**dadurch gekennzeichnet,**
**daß** die ringseitige Stirnfläche (38) wenigstens eines Stützelements (28) gekrümmt ist.

16. Durchbiegungseinstellwalze nach Anspruch 15,
**dadurch gekennzeichnet,**
**daß** das Stützelement (28) in einem Zylinderraum (36) angeordnet ist, dessen Boden (40) zur Stirnfläche (36) des Stützelements (28) komplementär gekrümmt ist.

17. Durchbiegungseinstellwalze nach einem der vorhergehenden Ansprüche,
**dadurch gekennzeichnet,**
**daß** der Lagerring (24) auf einer Seite über wenigstens ein hydrostatisches Stützelement (52) und/oder wenigstens eine hydrostatische Gleitfläche axial am Walzenmantel (12) abgestützt ist.

18. Durchbiegungseinstellwalze nach Anspruch 17,
**dadurch gekennzeichnet,**
**daß** der Lagerring (24) auf seiner dem betreffenden Walzenende zugewandten Seite über wenigstens ein hydrostatisches Stützelement (52) axial am Walzenmantel (12) abgestützt ist.

19. Durchbiegungseinstellwalze nach Anspruch 17 oder 18,
**dadurch gekennzeichnet,**
**daß** der Lagerring (24) auf seiner gegenüberliegenden Seite kippbar und/oder radial beweglich am Träger (16) abgestützt ist.

20. Durchbiegungseinstellwalze nach einem der vorhergehenden Ansprüche,
**dadurch gekennzeichnet,**
**daß** zwischen wenigstens einem beweglichen Stützelement (28) und dem Lagerring (24) eine Feder (48) angeordnet ist.

21. Durchbiegungseinstellwalze nach einem der vorhergehenden Ansprüche,
**dadurch gekennzeichnet,**
**daß** als Feder (48) eine Tellerfeder vorgesehen ist.

## Claims

1. A deflection controlled roll (10) comprising a rotatable roll jacket (12), a rotationally fixed carrier (16) arranged within the roll jacket (12), a hydraulic support element arrangement (14) between the carrier (16) and the roll jacket (12), a closed bearing ring (24) provided in a respective end region of the roll jacket (12) and movable relative to the carrier (16) in a press plane (20), and a bearing arrangement (26) between the bearing ring (24) and the roll jacket (12), **characterized in that** the bearing arrangement (26) comprises at least two hydrostatic support elements (28) which are mutually spaced in the peripheral direction and of which at least one is movable relative to the carrier (16); and **in that** at least one force generating device (30) is arranged between the carrier (16) and the roll jacket (12) and acts generally radially in the press plane (20) and radially penetrating the bearing ring (24).

2. A deflection controlled roll in accordance with claim 1, **characterized in that** at least one hydrostatic support element (28) is provided in each case at both sides of the press plane (20).

3. A deflection controlled roll in accordance with claim 2, **characterized in that** at least two hydrostatic support elements (28) each are provided at both sides of the press plane (20).

4. A deflection controlled roll in accordance with any one of the preceding claims, **characterized in that** at least some of the hydrostatic support elements (28) are arranged pair-wise on mutually opposite bearing ring sides and the two support elements (28) of each pair have mutually opposed radial active directions.

5. A deflection controlled roll in accordance with any one of the preceding claims, **characterized in that** two force generating devices (30) are provided arranged at mutually opposite carrier sides and acting in opposite radial directions.

6. A deflection controlled roll in accordance with any one of the preceding claims, **characterized in that** at least one force generating device (30) comprising a hydraulic piston in cylinder arrangement is provided.

7. A deflection controlled roll in accordance with any one of the preceding claims, **characterized in that** the bearing ring (24) is rigidly designed.

8. A deflection controlled roll in accordance with any one of the preceding claims, **characterized in that** the bearing ring (24) is dimensioned such that a ring gap (32) is formed between the carrier (16) and the bearing ring (24) with a mutually coaxial arrangement of these.

9. A deflection controlled roll in accordance with any one of the preceding claims, **characterized in that** the moving support element (28) has a bearing pocket arrangement (34) whose active surface (A_{L}) is bigger than a surface (A_{K}) of the support element (28) onto which a pressure between the bearing ring (24) and the support element (28) acts.

10. A deflection controlled roll in accordance with claim 9, **characterized in that** the support element (28) can be moved into the bearing ring (24) up to the lock position under load.

11. A deflection controlled roll in accordance with any one of the preceding claims, **characterized in that** the bearing pocket arrangement (34) is connected to a supply device which supplies a constant volume flow of hydraulic fluid.

12. A deflection controlled roll in accordance with claim 11, **characterized in that** the bearing pocket arrangement (34) is connected to a pressure space (48) provided between the support element (28) and the bearing ring (24) via a capillary arrangement (42) penetrating the support element (28).

13. A deflection controlled roll in accordance with claim 12, **characterized in that** the capillary arrangement (42) is dimensioned such that a pre-determined pre-tension force is not exceeded in the unloaded state, but a pre-determined minimum gap height is ensured with a pre-determined load.

14. A deflection controlled roll in accordance with any one of the preceding claims, **characterized in that** the moving support element(s) (28) has/have a lift in the radial direction with respect to the bearing ring (24) which corresponds at least substantially to a maximum change which results from thermal diameter differences and/or roll jacket deformations or carrier deformations due to nip loads.

15. A deflection controlled roll in accordance with any one of the preceding claims, **characterized in that** the ring-side end face (38) of at least one support element (28) is bent.

16. A deflection controlled roll in accordance with claim 15, **characterized in that** the support element (28) is arranged in a cylinder space (36) whose base (40) is bent in complementary manner with respect to the end face (36) of the support element (28).

17. A deflection controlled roll in accordance with any one of the preceding claims, **characterized in that** the bearing ring (24) is axially supported at the roll jacket (12) at one side via at least one hydrostatic support element (52) and/or at least one hydrostatic slide surface.

18. A deflection controlled roll in accordance with claim 17, **characterized in that** the bearing ring (24) is axially supported at the roll jacket (12) at its side facing the relevant roll end via at least one hydrostatic support element (52).

19. A deflection controlled roll in accordance with claim 17 or claim 18, **characterized in that** the bearing ring (24) is supported at its opposite side in a tiltable and/or radially movable manner at the carrier (16).

20. A deflection controlled roll in accordance with any one of the preceding claims, **characterized in that** a spring (48) is arranged between at least one movable support element (28) and the bearing ring (24).

21. A deflection controlled roll in accordance with any one of the preceding claims, **characterized in that** a disk spring is provided as the spring (48).

## Revendications

1. Cylindre de réglage de la flexion (10) comportant une enveloppe de cylindre (12) rotative, un support (16) solidaire en rotation disposé à l'intérieur de l'enveloppe de cylindre (12), un dispositif hydraulique (14) à éléments de soutien prévu entre le support (16) et l'enveloppe de cylindre (12), une bague de palier (24) fermée prévue dans chaque zone d'extrémité de l'enveloppe de cylindre (12), qui peut se déplacer par rapport au support (16) dans un plan de pressage (20), et un dispositif de palier (26) entre la bague de palier (24) et l'enveloppe de cylindre (12),
**caractérisé en ce que**
le dispositif de palier (26) comporte au moins deux éléments de soutien hydrostatiques (28) espacés l'un de l'autre dans la direction périphérique, dont l'un au moins est mobile par rapport au support (16), et **en ce qu'**au moins un transmetteur de force (30) agissant de façon générale radialement dans le plan de pressage (20), et traversant radialement la bague de palier (24), est disposé entre le support (16) et l'enveloppe de cylindre (12).

2. Cylindre de réglage de la flexion selon la revendication 1,
**caractérisé en ce que**
au moins un élément de soutien hydrostatique (28) est prévu de part et d'autre du plan de pressage (20).

3. Cylindre de réglage de la flexion selon la revendication 2,
**caractérisé en ce que**
au moins deux éléments de soutien hydrostatiques (28) sont prévus de part et d'autre du plan de pressage (20).

4. Cylindre de réglage de la flexion selon l'une des revendications précédentes,
**caractérisé en ce que**
au moins une partie des éléments de soutien hydrostatiques (28) est disposée par couples sur des faces de la bague de palier situées l'une en face de l'autre, et **en ce que** les deux éléments de soutien (28) de chaque couple agissent dans des sens radiaux opposés.

5. Cylindre de réglage de la flexion selon l'une des revendications précédentes,
**caractérisé en ce que**
il est prévu deux transmetteurs de force (30) agissant dans des sens radiaux opposés, qui sont disposés sur des faces du support situées l'une en face de l'autre.

6. Cylindre de réglage de la flexion selon l'une des revendications précédentes,
**caractérisé en ce que**
il est prévu au moins un transmetteur de force (30) comportant un vérin hydraulique.

7. Cylindre de réglage de la flexion selon l'une des revendications précédentes,
**caractérisé en ce que**
la bague de palier (24) est agencée de façon rigide.

8. Cylindre de réglage de la flexion selon l'une des revendications précédentes,
**caractérisé en ce que**
la bague de palier (24) est dimensionnée de telle sorte que, lorsque le support (16) et la bague de palier (24) sont disposés coaxialement l'un par rapport à l'autre, une fente annulaire (32) soit formée entre eux.

9. Cylindre de réglage de la flexion selon l'une des revendications précédentes,
**caractérisé en ce que**
l'élément de soutien (28) mobile comporte un dispositif (34) à poches de palier, dont la surface active (A_{L}) est plus grande qu'une surface (A_{K}) de l'élément de soutien (28), sur laquelle agit une pression entre la bague de palier (24) et l'élément de soutien (28).

10. Cylindre de réglage de la flexion selon la revendication 9,
**caractérisé en ce que**
l'élément de soutien (28) peut être enfoncé sous l'effet d'une charge dans la bague de palier (24) jusqu'à la couche dure.

11. Cylindre de réglage de la flexion selon l'une des revendications précédentes,
**caractérisé en ce que**
le dispositif (34) à poches de palier est relié à un dispositif d'alimentation qui délivre un flux volumique constant de liquide hydraulique.

12. Cylindre de réglage de la flexion selon la revendication 11,
**caractérisé en ce que**
le dispositif (34) à poches de palier est relié à un espace sous pression (48) prévu entre l'élément de soutien (28) et la bague de palier (24) par l'intermédiaire d'un dispositif (42) à tubes capillaires traversant l'élément de soutien (28).

13. Cylindre de réglage de la flexion selon la revendication 12,
**caractérisé en ce que**
le dispositif (42) à tubes capillaires est dimensionné de telle sorte qu'une force de précontrainte prédéterminée ne soit pas dépassée à l'état hors charge, mais qu'une hauteur de fente minimale prédéterminée soit assurée lors d'une charge prédéterminée.

14. Cylindre de réglage de la flexion selon l'une des revendications précédentes,
**caractérisé en ce que**,
dans la direction radiale, l'élément ou les éléments de soutien (28) mobiles ont une hauteur de levée par rapport à la bague de palier (24) qui correspond, au moins sensiblement, à une modification maximale résultant de différences thermiques de diamètre et/ou de déformations de l'enveloppe de cylindre ou du support dues à des charges de la ligne de contact.

15. Cylindre de réglage de la flexion selon l'une des revendications précédentes,
**caractérisé en ce que**
la face frontale (38) située du côté de la bague d'au moins un élément de soutien (28) est cintrée.

16. Cylindre de réglage de la flexion selon la revendication 15,
**caractérisé en ce que**
l'élément de soutien (28) est disposé dans un espace cylindrique (36), dont le fond (40) est cintré de façon complémentaire à la face frontale (36) de l'élément de soutien (28).

17. Cylindre de réglage de la flexion selon l'une des revendications précédentes,
**caractérisé en ce que**
la bague de palier (24) prend axialement appui d'un côté sur l'enveloppe de cylindre (12) par l'intermédiaire d'au moins un élément de soutien hydrostatique (52) et/ou d'au moins une surface de glissement hydrostatique.

18. Cylindre de réglage de la flexion selon la revendication 17,
**caractérisé en ce que**,
au niveau de son côté orienté vers l'extrémité concernée du cylindre, la bague de palier (24) prend appui sur l'enveloppe de cylindre (12) par l'intermédiaire d'au moins un élément de soutien hydrostatique (52).

19. Cylindre de réglage de la flexion selon la revendication 17 ou 18,
**caractérisé en ce que**,
au niveau de son côté opposé, la bague de palier (24) est soutenue de façon à pouvoir basculer et/ou de façon radialement mobile sur le support (16).

20. Cylindre de réglage de la flexion selon l'une des revendications précédentes,
**caractérisé en ce que**
un ressort (48) est disposé entre au moins un élément de soutien (28) mobile et la bague de palier (24).

21. Cylindre de réglage de la flexion selon l'une des revendications précédentes,
**caractérisé en ce que**
un ressort à disques est prévu en tant que ressort (48).
